# EUROPEAN PATENT APPLICATION

(11) **EP 2 276 217 A2**
(43) Date of publication of application: **19.01.2011**
(21) Application number: 10169357.0
(22) Date of filing: 13.07.2010
(51) Int. Cl.: H04L 29/06, H04L 12/26

(54) **Profile-based and dictionary based graph caching**

(30) Priority: 17.07.2009 US 505324
(71) Applicant: Cavium Networks, Inc., Mt. View, CA 94043 (US)
(72) Inventor: Goyal, Rajan, Saratoga, CA 95070 (US); Billa, Satyanarayana Lakshmipathi, Sunnyvale, CA 94085 (US); Rana, Jai Singh, Uttarakhand (IN)
(74) Representative: Neobard, William John

(57) **Abstract**

Methods and apparatuses are disclosed for caching portions of a Deterministic Finite Automata (DFA) graph during a compilation stage prior to a run-time stage that identifies attack traffic based on the graph. Cacheable components are identified based on a traffic profile, a dictionary of keywords, and/or a geometrical configuration of the graph. Techniques are disclosed for performing various types of caching alone or in combination with other types. Caching based on a dictionary or profile exploit a tendency of graph traversals performed during non-attack scenarios to remain near root nodes that correspond to the start of patterns designating blacklist traffic. By caching nodes that are near root nodes and that are visited frequently during peacetime (non-attack) scenarios, significant cache hits may be achieved during run-time execution. Caching graph components while compiling patterns using presently disclosed techniques avoids the need for expensive hardware to learn what and when to cache.

## Description

### BACKGROUND

The Open Systems Interconnection (OSI) Reference Model defines seven network protocol layers (L1-L7) used to communicate over a transmission medium. The upper layers (L4-L7) represent end-to-end communications and the lower layers (L1-L3) represent local communications.

Networking application aware systems need to process, filter and switch a range of L3 to L7 network protocol layers, for example, L7 network protocol layers such as, HyperText Transfer Protocol (HTTP) and Simple Mail Transfer Protocol (SMTP), and L4 network protocol layers such as Transmission Control Protocol (TCP). In addition to processing the network protocol layers, the networking application aware systems need to simultaneously secure these protocols with access and content based security through L4-L7 network protocol layers including Firewall, Virtual Private Network (VPN), Secure Sockets Layer (SSL), Intrusion Detection System (IDS), Internet Protocol Security (IPSec), Anti-Virus (AV) and Anti-Spam functionality at wire-speed.

Network processors are available for high-throughput L2 and L3 network protocol processing, that is, performing packet processing to forward packets at wire-speed. Typically, a general purpose processor is used to process L4-L7 network protocols that require more intelligent processing. Although a general purpose processor can perform the compute intensive tasks, it does not provide sufficient performance to process the data so that it can be forwarded at wire-speed.

Content aware networking requires inspection of the contents of packets at "wire speed." The content may be analyzed to determine whether there has been a security breach or an intrusion. A large number of patterns and rules in the form of regular expressions are applied to ensure that all security breaches or intrusions are detected. A regular expression is a compact method for describing a pattern in a string of characters. The simplest pattern matched by a regular expression is a single character or string of characters, for example, /c/ or /cat/. The regular expression also includes operators and meta-characters that have a special meaning.

Through the use of meta-characters, the regular expression can be used for more complicated searches such as, "abc*xyz". That is, find the string "abc", followed by the string "xyz", with an unlimited number of characters in-between "abc" and "xyz". Another example is the regular expression "abc??abc*xyz;" that is, find the string "abc," followed two characters later by the string "abc" and an unlimited number of characters later by the string "xyz."

An Intrusion Detection System (IDS) application inspects the contents of all individual packets flowing through a network, and identifies suspicious patterns that may indicate an attempt to break into or compromise a system. One example of a suspicious pattern may be a particular text string in a packet followed 100 characters later by another particular text string.

Content searching is typically performed using a search algorithm such as, Deterministic Finite Automata (DFA) to process the regular expression. The DFA processes an input stream of characters sequentially using a DFA graph and makes a state transition based on the current character and state.

### SUMMARY

An embodiment is a computer implemented method for caching a deterministic finite automata-based graph. The method comprises traversing the graph based on a profile of traffic to search for cacheable portions of the graph and caching the profile-based cacheable portions of the graph.

The graph may be traversed during a compilation stage. Traversing the graph may further include maintaining a count of a number of times each node or arc in the graph is visited during traversal, sorting the nodes or arcs by frequency of visits, and selecting, from among more frequently visited nodes or arcs, the profile-based cacheable portions of the graph.

The profile may be a profile of non-attack (normal or peacetime) traffic. The profile may be a profile of traffic during a time when a majority of system processing resources are assigned to handling traffic.

The method may further include receiving data packets during a non-attack scenario and generating the profile based on the received packets. Generation of the profile may include categorizing the received packets according to application and categorizing portions of each packet according to domain.

The method may further include generating the graph based on a plurality of regular expression patterns corresponding to a blacklist.

The method may further include analyzing nodes in the graph to search for cacheable portions based on a geometrical configuration of the graph and caching the geometry-based cacheable portions of the graph.

The graph may be searched for geometry-based cacheable portions only if cache resources are available after caching the profile-based cacheable portions.

Analyzing the nodes in the graph to search for geometry-based cacheable portions may further include determining an accessibility ranking for each node. The accessibility ranking characterizes a likelihood each node will be accessed during a search. Geometry-based cacheable portions of the graph are selected based on the accessibility ranking.

The method may further include analyzing a dictionary of keywords to identify cacheable portions based on the dictionary.

The keywords may be terms that occur frequently in non-attack traffic.

Analyzing the dictionary may further include concatenating the keywords into a stream, determining a frequency of tokens within a specified range of lengths, and selecting, from among portions of the graph corresponding to tokens that occur more frequently, the dictionary-based cacheable portions.

Analyzing the nodes in the graph may further includes identifying cacheable candidates based on the geometrical configuration of the graph and selecting cacheable portions among the cacheable candidates based on a dictionary of keywords.

The method may further include analyzing a dictionary of keywords to identify cacheable portions based on the dictionary.

Another embodiment is a computer implemented method for caching a deterministic finite automata-based graph that comprises analyzing a dictionary of keywords to identify cacheable portions of the graph based on the dictionary and caching the cacheable portions of the graph.

Another embodiment is a computer implemented method for caching a deterministic finite automata-based graph that comprises analyzing nodes in the graph to identify cacheable candidates based on a geometrical configuration of the graph, selecting cacheable portions of the graph among the cacheable candidates based on a dictionary of keywords, and caching the cacheable portions of the graph.

Other embodiments are corresponding apparatuses to perform the methods described above. For example, a processor has a processing unit configured to traverse a searchable graph including a plurality of interconnected nodes and arcs connecting adjacent nodes to determine cacheable portions of the graph based on a profile of traffic. The processor also has a cache configured to cache the cacheable portions of the graph.

Similar processors are provided in other embodiments for caching based on a geometrical configuration of the graph or based on a dictionary.

### BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
Figs. 1A and 1B are block diagrams of a security appliance including a network services processor and a protocol processor, respectively.
Fig. 2 is a block diagram of the network services processor shown in Fig. 1.
Fig. 3 is a block diagram illustrating content search elements used by the processor of Figs. 1A and 1B.
Fig. 4 is a block diagram of an example data structure that is used by the Content Search Mechanism (CSM) to traverse a graph.
Fig. 5 is an example of a DFA graph.
Fig. 6 is a flow diagram of a process for dictionary-based caching of elements of a graph.
Fig. 7 is an illustration of identification of cacheable portions based on a dictionary.
Fig. 8 is an illustration of a traffic profile.
Fig. 9 is a flow diagram of a process for profile-based caching of elements of a graph.
Fig. 10 is a block diagram of the network services processor shown in FIG. 2 including DFA cache memory units.

### DETAILED DESCRIPTION

A description of example embodiments of the invention follows.

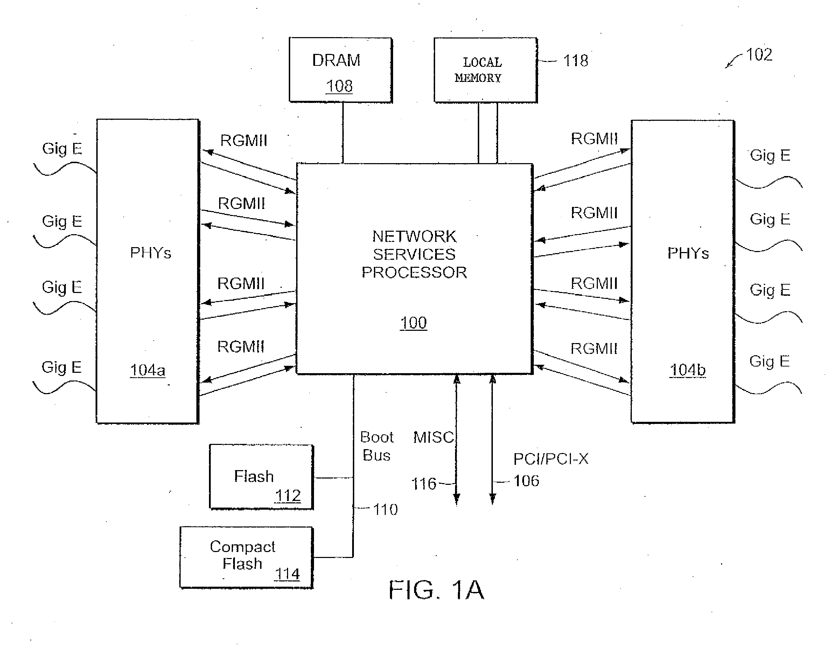

Fig. 1A is a block diagram of an example security appliance 102 including a network services processor 100. The security appliance 102 may be a standalone system that may switch packets received at one Ethernet port (Gig E) to another Ethernet port (Gig E) and perform a plurality of security functions on received packets prior to forwarding the packets. For example, the security appliance 102 may be used to perform security processing on packets received on a Wide Area Network prior to forwarding the processed packets to a Local Area Network.

The network services processor 100 processes Open System Interconnection network L2-L7 layer protocols encapsulated in received packets. As is well-known to those skilled in the art, the Open System Interconnection (OSI) reference model defines seven network protocol layers (L1-7). The physical layer (L1) represents the actual interface, electrical and physical that connects a device to a transmission medium. The data link layer (L2) performs data framing. The network layer (L3) formats the data into packets. The transport layer (L4) handles end to end transport. The session layer (L5) manages communications between devices, for example, whether communication is half-duplex or full-duplex. The presentation layer (L6) manages data formatting and presentation, for example, syntax, control codes, special graphics and character sets. The application layer (L7) permits communication between users, for example, file transfer and electronic mail.

The network services processor 100 may schedule and queue work (packet processing operations) for upper level network protocols, for example L4-L7, and allow processing of upper level network protocols in received packets to be performed to forward packets at wire-speed. Wire-speed is the rate of data transfer of the network over which data is transmitted and received. By processing the protocols to forward the packets at wire-speed, the network services processor does not slow down the network data transfer rate.

The network services processor 100 may include a plurality of Ethernet Media Access Control interfaces with standard Reduced Gigabyte Media Independent Interface (RGMII) connections to the off-chip PHYs 104a, 104b.

The network services processor 100 may also receive packets from the Ethernet ports (Gig E) through the physical interfaces PHY 104a, 104b, and perform L2-L7 network protocol processing on the received packets and forwards processed packets through the physical interfaces 104a, 104b to another hop in the network or the final destination or through the PCI bus 106 for further processing by a host processor. The network protocol processing may include processing of network security protocols such as Firewall, Application Firewall, Virtual Private Network (VPN) including IP Security (IPSec) and/or Secure Sockets Layer (SSL), Intrusion Detection System (IDS) and Anti-virus (AV).

The network services processor 100 may also include a memory controller for controlling local Dynamic Random Access Memory (DRAM) 118. The local DRAM 118 may be used for Internet Services and Security applications allowing fast lookups, including the string-matching that may be required for Intrusion Detection System (IDS) or Anti Virus (AV) applications and other applications that require string matching.

The network services processor 100 may perform pattern search, regular expression processing, content validation, transformation and security accelerate packet processing according to an embodiment of the present invention. The regular expression processing and pattern search may be used to perform string matching for AV and IDS applications and other applications that require string matching.

A DRAM controller in the network services processor 100 may control access to an external Dynamic Random Access Memory (DRAM) 108 that is coupled to the network services processor 100. The DRAM 108 may store data packets received from the PHYs interfaces 104a, 104b or the Peripheral Component Interconnect Extended (PCI-X) interface 106 for processing by the network services processor 100. In one embodiment, the DRAM interface supports 64 or 128 bit Double Data Rate II Synchronous Dynamic Random Access Memory (DDR II SDRAM) operating up to 800MHz. The DRAM may also store rules data required for lookup and pattern matching in DFA graph expression searches.

A boot bus 110 may provide the necessary boot code which may be stored in flash memory 112 and may be executed by the network services processor 100 when the network services processor 100 is powered-on or reset. Application code may also be loaded into the network services processor 100 over the boot bus 110, from a device 114 implementing the Compact Flash standard, or from another high-volume device, which can be a disk, attached via the PCI bus.

The miscellaneous I/O interface 116 offers auxiliary interfaces such as General Purpose Input/Output (GPIO), Flash, IEEE 802 two-wire Management Interface (MDIO), Universal Asynchronous Receiver-Transmitters (UARTs) and serial interfaces.

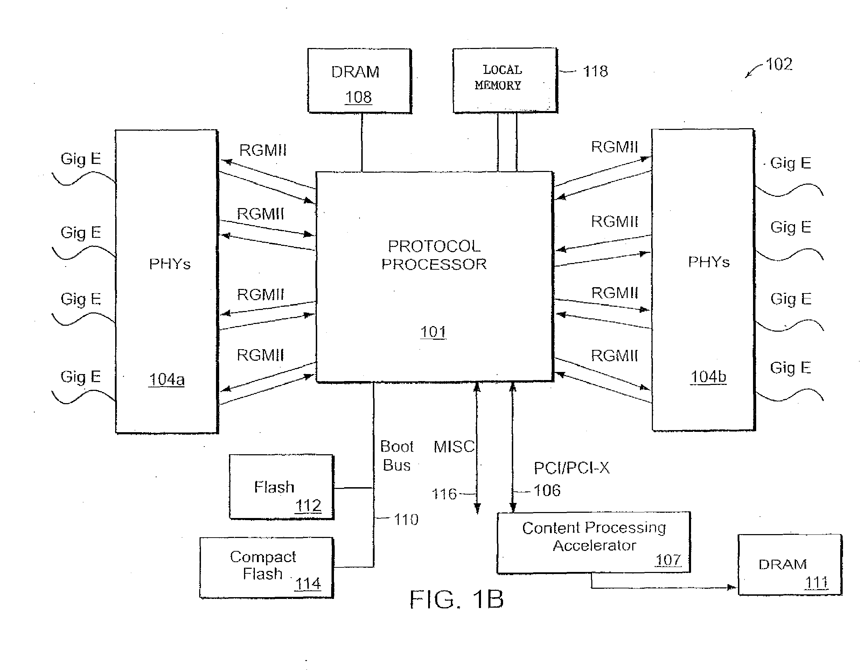

It should be appreciated that the example security appliance 102 may alternatively include a protocol processor 101 (Fig. 1B). The protocol processor 101 may include the element of the network services processor 100 with the addition of a content processing accelerator 107, connected to the processor 101 via the PCI/PCI-X connection 106, and an external DRAM 111 connected to the accelerator 107. The accelerator 107 and DRAM 111 may be employed in content search applications, therefore making all content searching operations external to the processor 101.

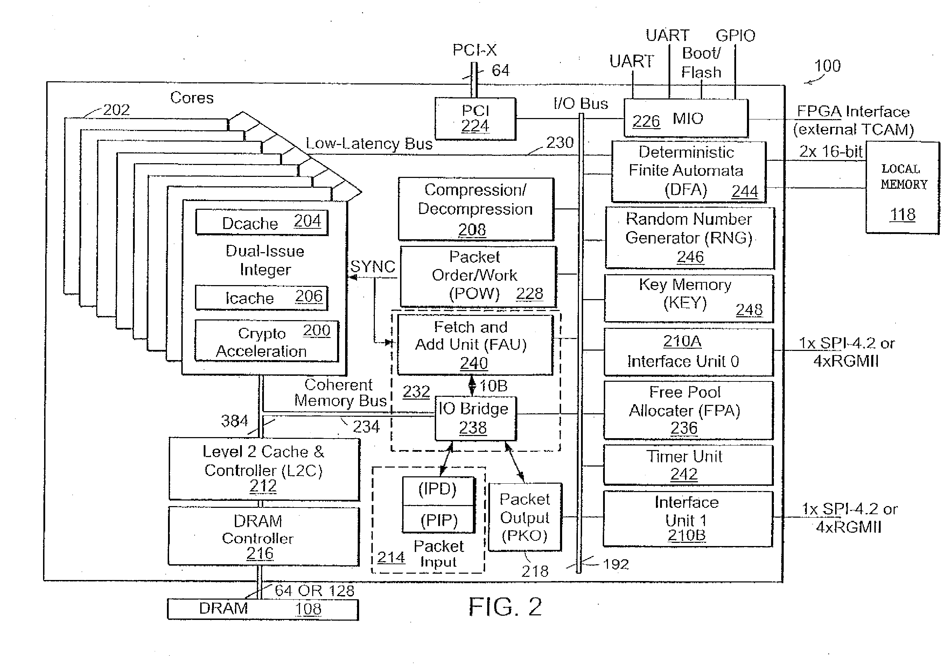

Fig. 2 is a block diagram of the network services processor 100, or the protocol processor 101 shown in Figs. 1A and 1B, respectively. The network services processor 100, and/or the protocol processor 101, delivers high application performance using a plurality of processors (cores) 202. Network applications may be categorized into data plane and control plane operations. Each of the cores 202 may be dedicated to performing data plane or control plane operations. A data plane operation may include packet operations for forwarding packets. A control plane operation may include processing of portions of complex higher level protocols such as Internet Protocol Security (IPSec), Transmission Control Protocol (TCP) and Secure Sockets Layer (SSL). A data plane operation may include processing of other portions of these complex higher level protocols.

A packet may be received by any one of the interface units 210a, 210b through a SPI-4.2 or RGM II interface. A packet may also be received by the PCI interface 224. The interface unit 210a, 210b handles L2 network protocol pre-processing of the received packet by checking various fields in the L2 network protocol header included in the received packet. After the interface unit 210a, 210b has performed L2 network protocol processing, the packet is forwarded to the packet input unit 214. The packet input unit 214 may perform pre-processing of L3 and L4 network protocol headers included in the received packet. The pre-processing includes checksum checks for Transmission Control Protocol (TCP)/User Datagram Protocol (UDP) (L3 network protocols).

The packet input unit 214 may write packet data into buffers in Level 2 cache 212 or DRAM 108 in a format that is convenient to higher-layer software executed in at least one processor 202 for further processing of higher level network protocols. The packet input unit 214 may also support a programmable buffer size and can distribute packet data across multiple buffers to support large packet input sizes.

The Packet order/work (POW) module (unit) 228 may queue and schedule work (packet processing operations) for the processor 202. Work is defined to be any task to be performed by a processor that is identified by an entry on a work queue. The task can include packet processing operations, for example, packet processing operations for L4-L7 layers to be performed on a received packet identified by a work queue entry on a work queue. Each separate packet processing operation is a piece of the work to be performed by a processor on the received packet stored in memory (L2 cache memory 212 or DRAM 108). For example, the work may be the processing of a received Firewall/ Virtual Private Network (VPN) packet. The processing of a Firewall/VPN packet may include the following separate packet processing operations (pieces of work): (1) defragmentation to reorder fragments in the received packet; (2) IPSec decryption (3) IPSec encryption; and (4) Network Address Translation (NAT) or TCP sequence number adjustment prior to forwarding the packet.

The network services processor 100, and/or the protocol processor 101, may also include a memory subsystem. The memory subsystem may include level 1 data cache memory 204 in each processor 202, instruction cache in each processor 202, level 2 cache memory 212, a DRAM controller 216 for external DRAM memory and the interface 230 to external local memory 118. The memory subsystem is architected for multi-processor support and tuned to deliver both high-throughput and low-latency required by memory intensive content networking applications. Level 2 cache memory 212 and external DRAM memory 108 (Fig. 1) may be shared by all of the processors 202 and I/O co-processor devices.

The network services processor 100, and/or the protocol processor 101, may also include application specific co-processors that offload the processors 202 so that the network services processor achieves high-throughput. The application specific co-processors include a DFA co-processor 244 that performs Deterministic Finite Automata (DFA) and a compression/decompression co-processor 208 that performs compression and decompression.

Each processor 202 may be a dual-issue, superscalar processor with instruction cache 206, Level 1 data cache 204, built-in hardware acceleration (crypto acceleration module) 200 for cryptography algorithms with direct access to local memory over the low latency memory bus 230. The low-latency direct-access path to local memory 118 bypasses the L2 cache memory 212 and can be directly accessed from both the processors (cores) 202 and a DFA co-processor 244.

Prior to describing the operation of the content search macros used for regular expression processing and pattern search in further detail, the other modules in the network services processor 100 will be described. In an example, after the packet has been processed by the processors 202, a packet output unit (PKO) 218 reads the packet data from L2 cache or DRAM, performs L4 network protocol post-processing (e.g., generates a TCP/UDP checksum), forwards the packet through the interface unit 210a, 210b and frees the L2 cache 212 or DRAM 108 locations used to store the packet.

Each processor 202 is coupled to the L2 cache by a coherent memory bus 234. The coherent memory bus 234 is the communication channel for all memory and I/O transactions between the processors 202, an I/O Bridge (IOB) 232 and the Level 2 cache and controller 212.

A Free Pool Allocator (FPA) 236 maintains pools of pointers to free memory in level 2 cache memory 212 and DRAM 108. A bandwidth efficient (Last In First Out (LIFO)) stack is implemented for each free pointer pool. If a pool of pointers is too large to fit in the Free Pool Allocator (FPA) 236, the Free Pool Allocator (FPA) 236 builds a tree/list structure in level 2 cache 212 or DRAM 108 using freed memory in the pool of pointers to store additional pointers.

The I/O Bridge (IOB) 232 manages the overall protocol and arbitration and provides coherent I/O partitioning. The IOB 232 includes a bridge 238 and a Fetch and Add Unit (FAU) 240. The bridge 238 includes buffer queues for storing information to be transferred between the I/O bus, coherent memory bus, the packet input unit 214 and the packet output unit 218.

The Fetch and Add Unit (FAU) 240 is a 2KB register file supporting read, write, atomic fetch-and-add, and atomic update operations. The Fetch and Add Unit (FAU) 240 can be accessed from both the processors 202 and the packet output unit 218. The registers store highly-used values and thus reduce traffic to access these values. Registers in the FAU 240 are used to maintain lengths of the output queues that are used for forwarding processed packets through the packet output unit 218.

The PCI interface controller 224 has a DMA engine that allows the processors 202 to move data asynchronously between local memory in the network services processor and remote (PCI) memory in both directions.

Typically, content aware application processing utilizes a deterministic finite Automata (DFA) to recognize a pattern in the content of a received packet. The DFA is a finite state machine, that is, a model of computation including a set of states, a start state, an input alphabet (set of all possible symbols) and a transition function that maps input symbols and current states to a next state. Computation begins in the start state and changes to new states dependent on the transition function. The DFA is deterministic, that is, the behavior can be completely predicted from the input. The pattern is a finite number of strings of characters (symbols) to search for in the input stream (string of characters).

The pattern is commonly expressed using a regular expression that includes atomic elements, for example, normal text characters such as, A-Z, 0-9 and meta-characters such as, *, ^ and |. The atomic elements of a regular expression are the symbols (single characters) to be matched. These are combined with meta-characters that allow concatenation (+) alternation (|), and Kleene-star (*). The meta-character for concatenation is used to create multiple character matching patterns from a single character (or sub-strings) while the meta-character for alternation (|) is used to create a regular expression that can match any of two or more sub-strings. The meta-character Kleene-star (*) allows a pattern to match any number, including no occurrences of the preceding character or string of characters. Combining different operators and single characters allows complex expressions to be constructed. For example, the expression (th(is|at)*) will match the following character strings: th, this, that, thisis, thisat, thatis, or thatat.

The character class construct [...] allows listing of a list of characters to search for, e.g. gr[ea]y looks for both grey and gray. A dash indicates a range of characters, for example, [A-Z]. The meta-character "." matches any one character.

The input to the DFA state machine is typically a string of (8-bit) bytes, that is, the alphabet is a single byte (one character or symbol). Each byte in the input stream results in a transition from one state to another state.

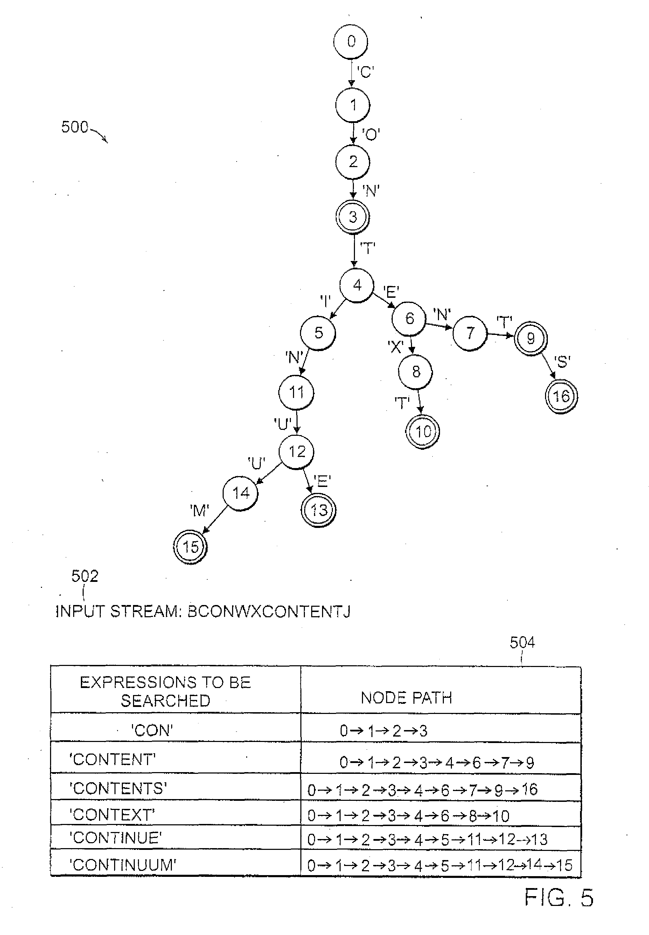

The states and the transition functions can be represented by a graph, where each
node in the graph represents a state and arcs in the graph represent state transitions. The current state of the state machine is represented by a node identifier that selects a particular graph node. The graph may be stored in local memory 118, or the main DRAM 108, and accessed by the processors 202 over the low latency bus. The processors 202 may access a DFA-based graph stored in the local memory, or the main DRAM 108, directly. The graph will be described later in conjunction with Fig. 5.

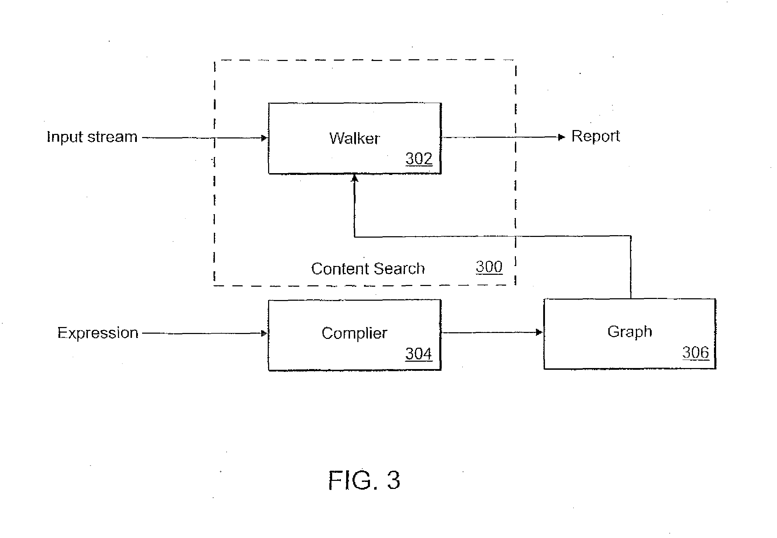

Fig. 3 is a block diagram illustrating content search macros that may be used by a processor 202 in the network services processor 100 shown in Fig. 2. Content search macros 300 may include a walker software component (process) 302 for searching the DFA-based content search graph that may be generated via a compiler software component 304. In another embodiment, the walker is implemented in hardware, e.g., in DFA co-processor 244. The content search macros 300 may be stored in L2/DRAM (212, 108) and may be executed by a processor 202. The DFA-based content search graph may be stored in local memory 118 which is accessible directly by the processor 202 through the low latency bus and memory controller shown in Fig. 2. The compiler 304 translates expressions into a DFA-based content search graph with a plurality of nodes. After the compiler 304 has generated the content search graph and the graph stored in local memory 118, or in main DRAM 108, the walker process 302 executed by one of the processors 202 or the DFA co-processor 244 walks input data (e.g., a string of characters) in the received data packet one character at a time and outputs a set of matches based on a search for a pattern in the input data using the content search graph.

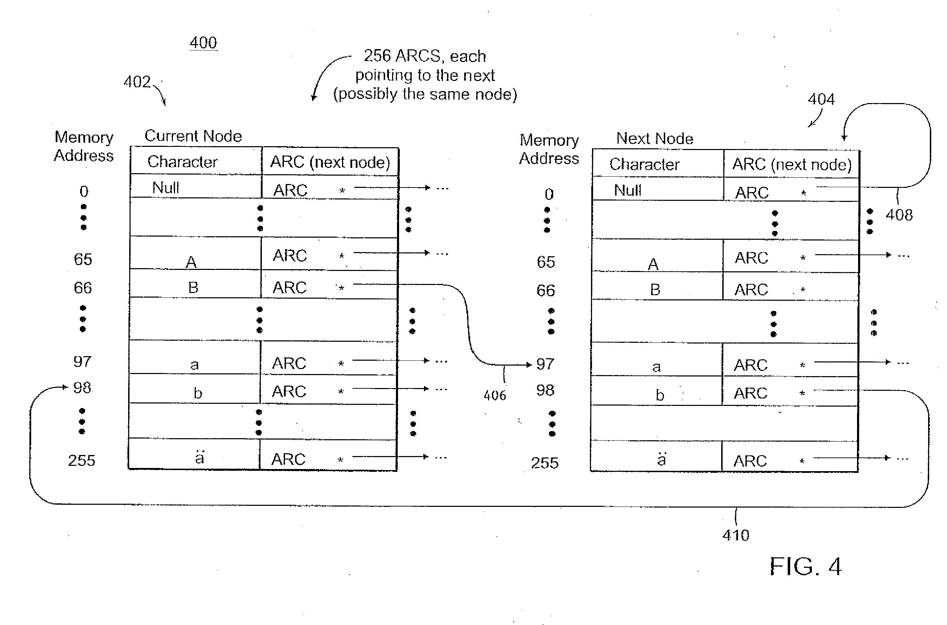

Fig. 4 is a block diagram of an example of a typical data structure 400 that may be stored in local Random Access Memory 118, or the main DRAM 108, and used by the Content Search Mechanism (CSM) executing in a processor 202 or in co-processor 244 to traverse a graph. The data structure 400 may be generated by the compiler component 304 based on the expressions to be searched for in the input stream.

The data structure may include a plurality of nodes, for example nodes 402 and 404, that may be used in a content search graph according to an embodiment of the present invention. Each node in the graph may include an array of 256 next node pointers, one for each unique input byte value; that is, 2⁸ (256 possible values, or 256 addresses) representing an ASCII value of the input. Each next node pointer contains a next node ID that directly specifies the next node/state for the input byte value.

As shown in Fig. 4, a current node 402 comprises 256 arcs. Each arc represents an input ASCII value. For example, in node 404, the arc addressed as '97' includes a next node pointer for the character 'a.' Similarly, a next node 404 also comprises 256 arcs, each arc comprising a unique address and including a next node pointer for a corresponding ASCII value.

The arcs of a node may be forward arcs (e.g., arcs which point to next nodes in the DFA graph), backward arcs (e.g., arcs which point back to a root node or a prior node), or repeating arcs (e.g., arcs which point back to the node to which they are associated with). Arc 408 of node 404 comprises a node pointer to node 404, and is therefore an example of a repeating arc. Arc 410 of node 404 comprises a next node pointer to node 402, which in this context is considered to be a prior node, and therefore arc 410 is an example of a backward arc. In the example provided by Fig. 4, the arc addressed as '66' of current node 402 comprises a forward next node pointer 406 pointing to next node 404, representing a character match of 'B' with the input stream. It should be appreciated that although Fig. 4 only shows 2 nodes, any number of nodes may be included in a DFA based content search graph.

Fig. 5 provides an example of a DFA graph 500 compiled via the compiler 304. For simplicity, only forward arcs have been illustrated in the example graph 500. The node marked as '0' is the root node and is a starting position for traversing the graph 500 with the walker process 302 (or a corresponding walker implemented in hardware). Each of the nodes are interconnected through arcs represented by the lines connecting each node. The arcs shown in Fig. 5 are forward arcs, or valid arcs, representing a character match between the expression being searched and an input character. The nodes comprising a double line (e.g., nodes 3, 9, 10, 13, 15, and 16) are referred to as mark nodes and represent a string match in the input stream. For example, the double line around node 3 represents a string match of 'CON'; node 9 represents a string match of 'CONTENT'; node 10 represents a string match of 'CONTEXT'; node 13 represents a string match of 'CONTINUE'; node 15 represents a string match of 'CONTINUUM'; and node 16 representing a string match of 'CONTENTS.' A table 504 illustrates all of the possible expression matches, and the corresponding nodal paths, for the example DFA graph 500. It should be appreciated that a backward arc may also a valid arc, representing a character match between the expression being searched and input character.

In operation, the walker process 302 (or a corresponding walker implemented in hardware) may evaluate the input stream one byte at a time. As an example, consider the input stream 502. The walker 302 evaluates the first character of the input stream 502 which is 'B.' The walker then proceeds to the root node to access the next node pointer associated with the character 'B.' In the example provided by the DFA graph 500, the root node only includes a valid match for the character 'C.' Therefore, the arc associated with the character 'B' is a repeating arc (not shown) comprising a next node pointer pointing back to the root node '0.'

The walker process 302 then proceeds to the next character in the input stream 502 which is 'C.' Upon locating the arc associated with the character 'C,' the walker 302 finds a next node pointer providing a valid match and pointing to node '1.' The walker process 302 then intakes the next input stream character 'O,' and proceeds to find the associated arc and next node pointer providing a valid match and leading to node '3.' Since node '3' is a mark node, the walker process 302 registers that an expression match for the string 'CON' in the input stream has been found.

Depending on the specific IDS application, the walker process 302 may proceed to evaluate the next character in the input stream 502 and analyze the character 'W.' The arc in node '3' associated with the character 'W' comprises a backward next node pointer to the root node '0' since the only valid match associated with node '3' is for the character 'T.' The walker process then proceeds to search for the arc in the root node '0' associated with the current character 'W.' Upon finding that the associated arc is a repeating arc, pointing back to the root node '0,' the walker process 302 proceeds to evaluate the next character in the input stream 502, which is 'X.'

Upon evaluating the next input character 'X,' the associated arc in the root node '0' is a repeating next node pointer since the root node does not comprise a valid match for the character 'X.' Following the same logic discussed above, the walker process 302 may then proceed to fmd an expression match for the string 'CONTENT' in mark node '9.' Upon reading the next character 'J,' the walker process traverses back to the root node '0' and the arc and next node pointer associated with the character 'J' are read from the root node '0.' Upon detecting a repeating arc and reaching the end of the input stream 502, the walker process 302 completes its walking of the DFA graph 500.

Typically, in the reading of each arc, the walker process 302 makes one access to external memory (e.g., local memory 118 or DRAM 108). These external memory accesses may be extremely costly and may require a significant amount of system resources.

In an embodiment of the present invention, a method for reducing the number of external memory accesses is presented. The number of external memory accesses may be reduced by caching portions of the DFA graph. In determining which portions of the DFA graph to cache, a number of techniques may be utilized. These techniques, which include caching based on a dictionary of keywords, caching based on a traffic profile, and caching based on a geometrical configuration of a DFA graph, are discussed in detail below.

The general motivation for caching is to identify a small percentage of graph components which may be cached, where this small percentage of graph components is likely to be accessed most of the time. This may result in less external memory accesses, resulting in lower DRAM bus utilization and improved throughput. This also allows for the use of cheaper, higher density main stream memory for graph storage as opposed to special costly low density latency memories.

Some key challenges and considerations that specifically motivate embodiments of the present invention are discussed in the following paragraphs.

First, caching generally (i.e., conventionally) takes advantage of spatial and temporal locality of data requests to memory. However, DFA graph walking (traversal) for regular expression matching tends to generate essentially random memory accesses that exhibit neither spatial nor temporal locality, making it difficult to extract performance gains via conventional caching techniques. It is generally ineffective to attempt to predict future accesses (i.e., identify what to cache) based on past accesses.

Second, an effective DFA graph caching system is generally resilient to Denial of Service attacks. In other words, the performance of whatever caching scheme that is used should not be degraded due to attack traffic.

Third, it is feasible to implement static caching systems, which identify what to cache offline in order to improve performance later during run-time via cache hits, under normal working conditions.

Fourth, the physical size of the cache is preferably small relative to the total size of the graph in order to make implementation possible or practical within constraints of a product (e.g., cost and die size of hardware).

Embodiments described below take into account the foregoing considerations.

In an embodiment, identification of cacheable components of a graph is based on a dictionary of keywords. The dictionary is a collection of keywords (patterns) and may be application specific. Depending on the application, there is typically a particular set of packets that represents the application during "peacetime." As used herein, "peacetime" refers to a state during which intrusions or other attacks are not underway. In other words, peacetime is different from an attack state during which attacks may be detected by matching patterns.

In an embodiment, the dictionary contains keywords that occur frequently in a representative set of peacetime packets as described above. The keywords may be commonly occurring keywords or terms in a protocol. For example, for HTTP traffic, a dictionary may have keywords that are often present in HTTP packets, e.g., HTTP header keywords or URL extensions. In another embodiment, a generic language dictionary for packet streams is used, i.e., the dictionary may be a collection of English (or other language) words occurring in packets. In another embodiment, the dictionary includes keywords from Linux or another operating system. In another embodiment, the dictionary may be constructed using actual packets (i.e., real packets that are received, not representative packets). The dictionary is generated automatically or manually in different embodiments.

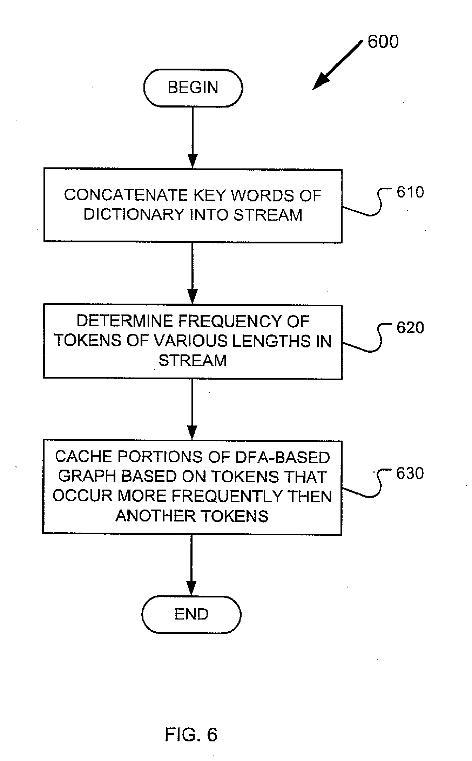

Fig. 6 is a flow diagram of dictionary-based caching according to an embodiment. After process 600 begins, keywords in the dictionary are concatenated into a stream (step 610). The relative frequency of occurrence of tokens of various lengths in the stream is determined (step 620). Tokens that occur relatively often are considered to be likely to occur during run-time. Portions of a DFA-based graph that correspond to such frequently occurring tokens are cached (step 630). Process 600 occurs during a graph compilation stage as opposed to during run-time, so that dictionary-based caching occurs prior to run-time execution.

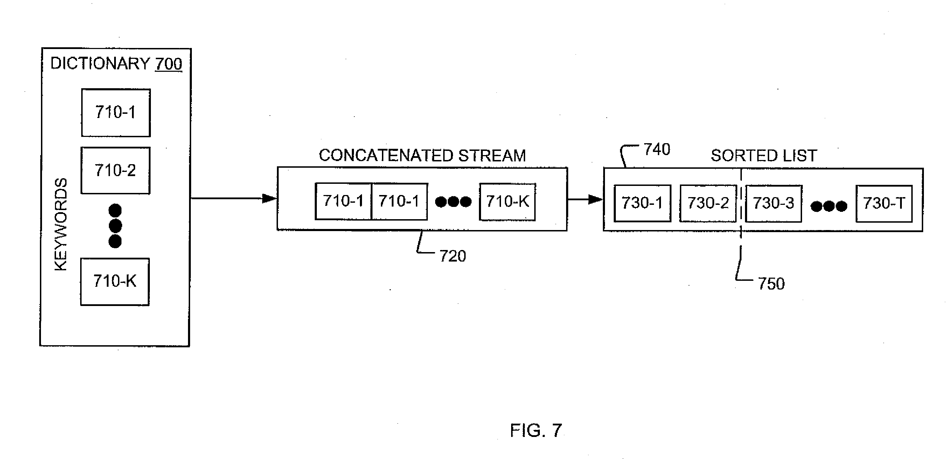

Fig. 7 illustrates dictionary-based caching according to an embodiment. A dictionary 700 contains keywords 710-1, 710-2, ..., 710-K. The keywords are concatenated into a stream 720. Tokens of various lengths are identified from the concatenated stream 720. As used herein, a token is a sequence of contiguous symbols (or characters) in the concatenated stream 720. In an embodiment, tokens may wrap around the end/beginning of the stream 720. Tokens of various length are counted. In an embodiment, the minimum and maximum lengths for tokens are configurable parameters. All tokens 730-1, 730-2, ..., 730-T having a length between these parameters are sorted according to frequency of occurrence in a sorted list 740. A compiler uses the sorted list 740 to identify dictionary-based cacheable components of a graph while compiling the graph. In an embodiment, the compiler identifies components of the graph starting at the head 730-1 of the list 740 (i.e., at the most frequently occurring token), proceeding towards the tail 730-T, and possibly stopping when cache resources are exhausted (marked by dashed line 750).

Pseudocode for dictionary-based caching is presented below.

### // Start of pseudocode

For each entry in the sorted list (s_entry) // first FOR
   For each (dnode=designated node, e.g., root node) in cache. // second FOR
      p_node = dnode
      For each character in s_entry (ch) // third FOR
         cache_node = p_node->arcs[ch]
         Check if cache_node is cacheable. If yes, cache it.
         If cache is FULL, stop
         p_node = cache_node
      // end of third FOR
   // end of second FOR
// end of first FOR

If cache is not full yet, identify cacheable entities using other caching mechanism(s), or increase the level of substrings to include more tokens.

### STOP

### // End of pseudocode

As stated above in the pseudocode, if the cache is not full yet after completion of the outermost (first) FOR loop, the level of substrings may be adjusted (i.e., by adjusting the minimum and/or maximum lengths of tokens) to include more tokens in the sorted list 740. Another option is to identify cacheable entities (components) using other caching mechanism, e.g., caching based on a geometrical configuration of a graph, or caching based on a traffic profile, both of which will be described later below.

An example is presented below to demonstrate aspects of dictionary-based caching. Suppose dictionary 700 contains only the following three keywords: "hello" (which is keyword 710-1), "world" (710-2), and "held" (710-3). A continuous stream 720 of bytes is created by concatenating all the words in the dictionary 700: "helloworldheld".

In some embodiments, the keywords are concatenated in a different order or in multiple orders, but only the foregoing order is used for the purpose of the present example.

Suppose minimum and maximum token lengths are configured as 1 and 4, respectively. Tokens (substrings of the concatenated stream 720) of lengths greater than or equal to 1 character and less than or equal to 4 characters are counted. In the present example, tokens and their counts are as follows:
- a.: count['h'] = 2
- b.: count['e'] = 2
- c.: count['l'] = 4
- d.: count['o'] = 2
- e.: count['w'] = 1
- f.: count['r'] = 1
- g.: count['d'] = 2
- h.: count['he'] = 2
- i.: count['el'] = 2
- j.: count['ll'] = 1
- k.: count['lo'] = 1
- l.: count['ow'] = 1
- m.: count['wo'] = 1
- n.: count['or'] = 1
- o.: count['rl'] = 1
- p.: count['ld'] = 2
- q.: count['dh']=1
- r.: count['hel'] = 2
- s.: count['ell'] = 1
- t.: count['llo'] = 1
- u.: count['low'] = 1
- v.: count['owo'] = 1
- w.: count['wor'] = 1
- x.: count['orl'] = 1
- y.: count['rld'] = 1
- z.: count['ldh'] = 1
- aa.: count['dhe'] = 1
- bb.: count['eld'] = 1
- cc.: count['hell'] = 1
- dd.: count['ello'] = 1
- ee.: count['llow'] = 1
- ff.: count['lowo'] = 1
- gg.: count['owor'] = 1
- hh.: count['worl'] = 1
- ii.: count['orld'] = 1
- jj.: count['rldh'] = 1
- kk.: count['ldhe'] = 1
- ll.: count['ldhe'] = 1
- mm.: count['dhel'] = 1
- nn.: count['held]=1

Using the above count information, a sorted list 740 is created (not shown in Fig. 7 for this particular example). The single-character token 'l' that occurs 4 times in the concatenated stream 720 is at the head of the sorted list 740 in this example.

In an embodiment, dictionary-based caching is combined with geometry-based caching as follows. Certain nodes of a graph are designated as cacheable components during compilation, e.g., based on a geometrical configuration of the graph. As many designated nodes are cached as possible, beginning with a root node (a start of a pattern). A designated node may have many child nodes ,e.g., 256 child nodes. If insufficient cache resources exist to cache all 256 child nodes, it is desirable to cache a subset of the child nodes that is more likely to be visited during run-time. For this purpose, dictionary-based caching is used. Child nodes corresponding to frequently-occurring tokens are given priority for caching. Thus, in an embodiment, geometrical techniques are used to identify candidates for caching, and dictionary-based techniques are used to select cacheable components from the candidates.

Intuition for why dictionary-based caching works is now presented. In embodiments of the invention, the dictionary 700 represents information that is present in packets during non-attack traffic, i.e., a "whitelist." In contrast, pattern files represent what should not be present in packets, i.e., a "blacklist." A DFA graph is generated in embodiments of the invention using the pattern file. Generally, patterns belonging to a specific protocol (e.g., HTTP) are compiled together. Packets belonging to that protocol share language characteristics and have common keywords. During peacetime (non-attack / non-intrusion), due to the characteristics of the graph (i.e., generated from a blacklist), the payload of traffic packets will not match (or will only partially match) patterns, so the graph traversal will remain at or around root nodes (i.e., start of patterns). Since dictionary-based caching evaluates tokens of various lengths for relative frequency of occurrence, paths of various lengths that originate from a root node are evaluated for likelihood of visitation and cached accordingly.

Ordinarily, i.e., following conventional prior art techniques, one would not look to a whitelist to derive techniques for efficiently processing a blacklist. Embodiments of the invention do exactly that by identifying cacheable components of a graph (representing a blacklist) based on whitelist information in a dictionary. Dictionary-based caching lets the compiler filter important child nodes out of all possible child nodes, where "important" denotes nodes at which graph traversal will happen most of the time in a peacetime scenario.

In another embodiment, caching is based on a traffic profile. A traffic profile is obtained before run-time execution. The traffic profile represents characteristics of packets during peacetime, e.g., during a state in which an attack is not occurring or a state in which a majority of system resources are devoted to normal load, i.e., processing traffic (as opposed to responding to attacks).

Intuition for why profile-based caching works is similar to the intuition for dictionary-based caching. Both techniques exploit the same fundamental observation: peacetime traffic will generate few, if any, matches to attack patterns, and numerous incomplete or partial matches present a good opportunity for caching. A profile used for caching is a representation of peacetime traffic (further details below). Actual contents of packets at run time (i.e. to be inspected) will generally be different from the profile and will depend on where the system 102 is deployed. However, basic characteristics of graph walking (e.g. which nodes/arcs are accessed or how deep the walker 302 travels from the root node, etc.) remain similar across all peacetime traffic. Hence, static caching that uses a small subset (profile) of packets is useful across a large range of actual traffic.

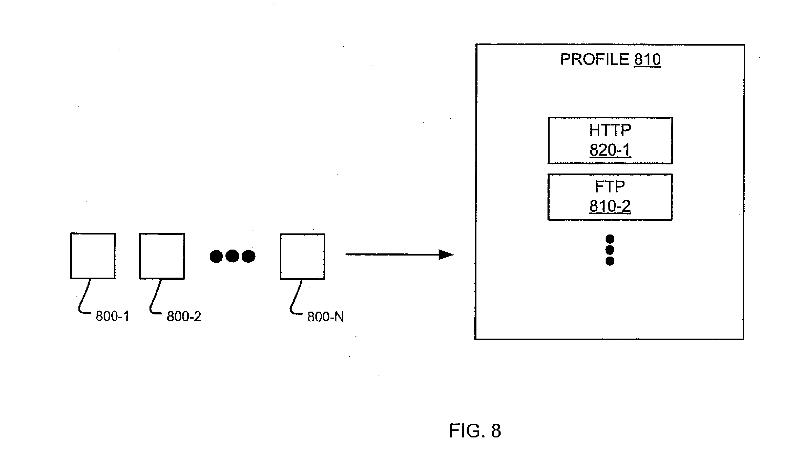

Fig. 8 shows how a traffic profile 810 is generated in an embodiment of the invention. Packets 800-1, 800-2, ..., 800-N (collectively 800) are captured during peacetime. The received packets 800 are categorized according to application, e.g., as HTTP packets 820-1, FTP packets 820-2, etc. Thus, the profile 810 represents characteristics of peacetime traffic categorized by application. Within a packet, further categorization may be performed according to domain (e.g., header vs. payload) or according to control vs. data segments (not shown in Fig. 8). The profile 810 conveys information regarding the type and frequency of peacetime packets.

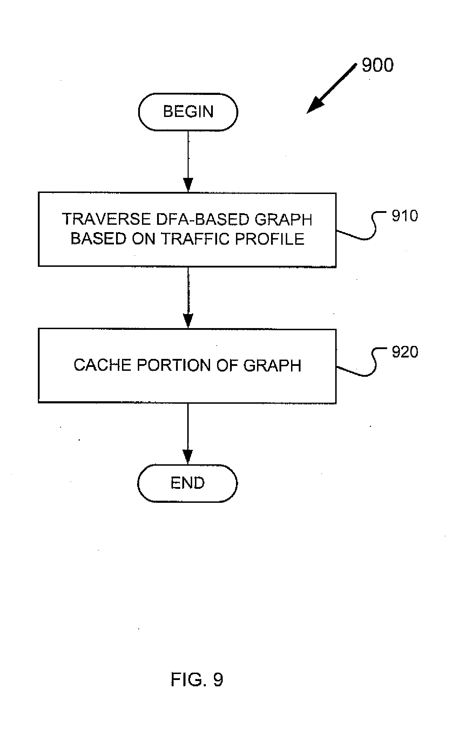

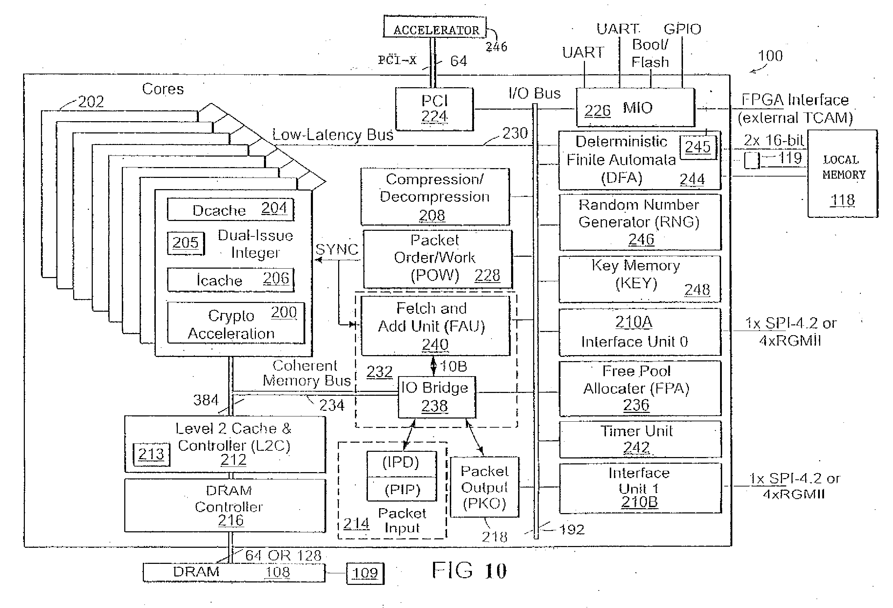

In an embodiment, patterns corresponding to blacklist information are compiled with a regular expression compiler to build a DFA graph. As shown in Fig. 9, in process 900, the graph is traversed based on the traffic profile 810 to search for cacheable portions of the graph (step 910). Graph traversal is performed by a functional walker process (implemented in software or hardware) that represents run-time execution, but traversal is performed during a graph compilation stage. Graph traversal uses the packet traces from the traffic profile 810, so the traversal emulates run-time execution, during compilation, using previously captured peacetime traffic. During traversal, each node and/or arc that is visited maintains a counter (e.g., in on-chip memory 205 located in level l or on-chip memory 213 located in level 2 as in Fig. 10) representing the number of times the node/arc was accessed (visited). One of ordinary skill appreciates that DFA techniques may be implemented using either nodes or arcs. At the end of the traversal, the nodes/arcs are sorted in descending order based on their respective counters. The resulting sorted list is used to identify which nodes/arcs to cache (i.e., to identify cacheable portions of the graph). Intuitively, nodes that were accessed relatively often during the traversal should be in the cache to promote increased performance during run-time.

Then, profile-based cacheable portions of the graph are cached (step 920). In other words, the graph is compiled with certain components cached. Further details of graph caching are presented below in the context of Fig. 10. The number of nodes/arcs to be cached depends on the amount of cache available or allocated for the graph. Profile-based cacheable portions are cached beginning with the node visited most often during the profile-based traversal and proceeding through the rest of the nodes (or arcs). If cache resources remain after profile-based caching (i.e., after all accessed nodes/arcs are cached), another mechanism is used to provide additional caching in an embodiment of the invention. For example, dictionary-based caching or geometry-based caching may be used in such cases.

In an embodiment, an accessibility ranking is utilized to determine cacheable components of a DFA graph. An accessibility ranking may be used to characterize the likelihood each node in a DFA graph may be accessed during a search. The accessibility ranking may be based on DFA geometrical configurations.

As the DFA graph is being generated by the compiler 304, the compiler may access each node to determine its accessibility ranking. The accessibility ranking may be evaluated based on an in-degree and/or out-degree of a node. The in-degree of a node is a measure of the number of arcs pointing to a node, while the out-degree of a node is a measure of the number of arcs pointing from a node.

As an example, node '4' of DFA graph 500 (Fig. 5) comprises an in-degree of one since only one arc, or valid next node pointer associated with the character 'T,' is directed towards the node. Node '4' comprises an out-degree of two since two arcs, or next node pointers (e.g., the next node pointer associated with the character 'I' and the next node pointer associated with the character 'E') are directed from node '4.' Similarly, node '3' comprises an in-degree of one (e.g., the valid next node pointer associated with the character 'N') and an out-degree of one (e.g., the valid next node pointer associated with the character 'T'). Therefore, since node '4' comprises an out-degree two times greater than the out-degree of node '3,' and therefore, node '4' will have a greater likelihood of being accessed. Thus, node '4' will be assigned a higher accessibility raking than node '3.'

The accessibility ranking of each node may also be determined based on a node's distance from the root node '0.' For example, node '1' may be assigned a higher accessibility ranking than node '8' since node '1' comprises a smaller nodal distance from the root node '0' than node '8.' All of the expression matches ('CON,' 'CONTENT,' 'CONTEXT,' CONTINUE,' CONTINUUM,') must traverse node '1' before reaching a respective mark node. In contrast, node '8' will only be traversed while searching for the expression 'CONTEXT.'

The accessibility ranking may be further determined based on a heaviness of an arc. The heaviness of an arc is defined by the number of expression patterns utilizing the arc. For example, consider the arc pointing to node '3' for the character 'N.' This arc is utilized by all the expressions to be searched in the DFA graph 500 (e.g., the expressions 'CON,' 'CONTENT,' 'CONTENTS,' 'CONTEXT,' 'CONTINUE,' AND 'CONTINUUM' all make use of the arc along its nodal path). In contrast, the arc pointing to node '9' for the character 'T' is only utilized by two searched expressions (e.g., the expressions 'CONTENT,' and 'CONTENTS' are the only expressions with make use of this arc). Therefore, the arc associated with the character 'N' and pointing to the node '3' comprises a greater heaviness than the arc associated with the character 'T' and pointing to the node '9,' Nodes associated with arcs that comprise a greater degree of heaviness may comprise a greater accessibility ranking.

It should be appreciated that DFA graph sub-sections may also be given a high accessibility ranking. For example, the sub-section of nodes '4'-'6' may deemed highly accessible on the basis of in-and out-degrees, nodal position from the root node, and heaviness. DFA graph sub-sections may be cached together to reduce the number of memory accesses. It should also be appreciated that any of the above mentioned methods for determining an accessibility ranking may be employed. Either method may be used in any combination. All the above methods may be employed with different weights for each method to determine final accessibility ranking of a node. It should also be appreciated that all the above mentioned methods are inter-dependent. In an embodiment, a node or sub-section of a DFA graph is be cached once the accessibility ranking has reached a pre-determined threshold value.

Thus, based on various techniques implemented during a compiling stage, nodes or sub-sections of the DFA graph may be chosen for caching. As illustrated in Fig. 10, the cache may be located on-chip, for example, on-chip memory 205 located in level 1 and on-chip memory 213 located in level 2 may be used for graph storing and caching. The nodes to be cached may also be stored in the data cache memory 204 and the level 2 cache 212. Additionally, the DFA co-processor 244 may also comprise memory storage 245 used for storing and caching DFA nodes or sub-sections. Both the local memory 118 and the DRAM 108 may also comprise dedicated DFA storage and caching. External memory 119 and 109 may also be used for dedicated DFA storage and caching. Additionally, an external accelerator 246 may be used to store and perform all CSM operations. A walker process running in the DFA 244 or accelerator 246 may have functionally based from hardware principles. A walker process running in the processors 202 may have functionality based from software principles. It should be appreciated that the level 1 and level 2 storage and cache 205 and 213, respectively, may be dedicated solely to DFA usage. Therefore, by caching nodes and DFA sub-sections, the number of external memory access may be greatly reduced.

It should be appreciated that the walker (implemented in either hardware or software) may also be configured to walk the graph in the graph cache as well as main memory. The graph may be generated in a manner allowing each arc to include information if the node it is pointing to is stored in the graph cache or in main memory. The walker may use this information to determine whether or not to access the next arc in the graph cache or in main memory.

It should also be appreciated that the node structure of a node stored in a graph cache may be different from the node structure stored in external memory. The node structure of a node stored in the graph cache may be optimized as compared to the node structure of a node stored in the main memory.

The various techniques for caching described above (geometry-based caching, dictionary-based caching, and profile-based caching) may be used singly or in combination in different embodiments. In some embodiments, multiple caching techniques are used in an interactive manner. For example, dictionary-based techniques are used to select certain cacheable components from candidates identified via geometry-based techniques. As another example, a first caching technique may be followed by other caching techniques if cache resources remain after the end of the first caching technique.

By caching portions of a graph, e.g., on to chip memory, high cache hit rates, e.g., 70% up to even 100%, have been observed even with minimal on-chip cache (relative to total graph size, e.g., 0.02%). Such cache hit performance depends on patterns, applications, and traffic payloads.

While this invention has been particularly shown and described with references to example embodiments thereof, it will be understood by those skilled in the art that various changes in form and details may be made therein without departing from the scope of the invention encompassed by the appended claims.

## Claims

1. A computer implemented method for caching a deterministic finite automata-based graph, the method comprising:
traversing the graph based on a profile of traffic to search for cacheable portions of the graph; and
caching the profile-based cacheable portions of the graph.

2. The method of claim 1 wherein the graph is traversed during a compilation stage.

3. The method of claim 1 wherein traversing the graph further includes:
maintaining a count of a number of times each node or arc in the graph is visited during traversal;
sorting the nodes or arcs by frequency of visits; and
selecting, from among more frequently visited nodes or arcs, the profile-based cacheable portions of the graph.

4. The method of claim 1 wherein the profile is a profile of non-attack traffic.

5. The method of claim 1 wherein the profile is a profile of traffic during a time when a majority of system processing resources are assigned to handling traffic.

6. The method of claim 1 further including:
receiving data packets during a non-attack scenario; and
generating the profile based on the received packets by:
categorizing the received packets according to application, and
categorizing portions of each packet according to domain.

7. The method of claim 1 further including generating the graph based on a plurality of regular expression patterns corresponding to a blacklist.

8. The method of claim 1 further including:
analyzing nodes in the graph to search for cacheable portions based on a geometrical configuration of the graph; and
caching the geometry-based cacheable portions of the graph.

9. The method of claim 8, wherein the graph is searched for geometry-based cacheable portions only if cache resources are available after caching the profile-based cacheable portions.

10. The method of claim 8, wherein analyzing the nodes in the graph to search for geometry-based cacheable portions further includes:
determining an accessibility ranking for each node, the accessibility ranking characterizing a likelihood each node will be accessed during a search; and
selecting the geometry-based cacheable portions of the graph based on the accessibility ranking.

11. The method of claim 8, further including analyzing a dictionary of keywords to identify cacheable portions based on the dictionary.

12. The method of claim 11, wherein the keywords are terms that occur frequently in non-attack traffic.

13. The method of claim 11, wherein analyzing the dictionary further includes:
concatenating the keywords into a stream;
determining a frequency of tokens in the stream, each token being within a specified range of lengths; and
selecting, from among portions of the graph corresponding to tokens that occur more frequently, the dictionary-based cacheable portions.

14. The method of claim 8, wherein analyzing the nodes in the graph further includes:
identifying cacheable candidates based on the geometrical configuration of the graph; and
selecting cacheable portions among the cacheable candidates based on a dictionary of keywords.

15. The method of claim 1, further including analyzing a dictionary of keywords to identify cacheable portions based on the dictionary.

16. A computer implemented method for caching a deterministic finite automata-based graph, the method comprising:
analyzing a dictionary of keywords to identify cacheable portions of the graph based on the dictionary; and
caching the cacheable portions of the graph.

17. A computer implemented method for caching a deterministic finite automata-based graph, the method comprising:
analyzing nodes in the graph to identify cacheable candidates based on a geometrical configuration of the graph;
selecting cacheable portions of the graph among the cacheable candidates based on a dictionary of keywords; and
caching the cacheable portions of the graph.

18. A processor comprising:
a processing unit configured to traverse a searchable graph including a plurality of interconnected nodes and arcs connecting adjacent nodes to determine cacheable portions of the graph based on a profile of traffic; and
a cache configured to cache the cacheable portions of the graph.

19. The processor of claim 18 wherein the graph is traversed during an compilation stage.

20. The processor of claim 18, further including:
a counter to maintain a count of a number of times each node or arc is visited during traversal; and
a sorted list including the nodes or arcs sorted by frequency of visits;
wherein the processing module is further configured to select, from among more frequently visited nodes or arcs, the profile-based cacheable portions of the graph.

21. The processor of claim 18, wherein the profile is a profile of non-attack traffic.

22. The processor of claim 18, wherein the profile is a profile of traffic during a time when a majority of system processing resources are assigned to handling traffic.

23. The processor of claim 18, wherein the processing unit is further configured to:
receive data packets during a non-attack scenario; and
generate the profile by based on the received packets by:
categorizing the received packets according to application, and
categorizing portions of each packet according to domain.

24. The processor of claim 18, wherein the processing unit is further configured to generate the graph based on a plurality of regular expression patterns corresponding to a blacklist.

25. The processor of claim 18 wherein the processing unit is further configured to analyze nodes in the graph to search for cacheable portions based on a geometrical configuration of the graph.

26. The processor of claim 25, wherein the graph is searched for geometry-based cacheable portions only if cache resources are available after caching the profile-based cacheable portions.

27. The processor of claim 25, wherein the processing unit is further configured to:
determine an accessibility ranking for each node, the accessibility ranking characterizing a likelihood each node will be accessed during a search; and
select the geometry-based cacheable portions of the graph based on the accessibility ranking.

28. The processor of claim 25, further including a dictionary of keywords; wherein the processing unit is further configured to analyze the dictionary to identify cacheable portions based on the dictionary.

29. The processor of claim 28, wherein the keywords are terms that occur frequently in non-attack traffic.

30. The processor of claim 28, wherein the processor is further configured to:
concatenate the keywords into a stream;
determine a frequency of tokens in the stream, each token being within a specified range of lengths; and
select, from among portions of the graph corresponding to tokens that occur more frequently, the dictionary-based cacheable portions.

31. The processor of claim 25, wherein the processing unit is further configured to:
identify cacheable candidates based on the geometrical configuration of the graph; and
select cacheable portions among the cacheable candidates based on a dictionary of keywords.

32. The processor of claim 18, further including a dictionary of keywords; wherein the processing unit is further configured to analyze the dictionary to identify cacheable portions based on the dictionary.

33. A processor comprising:
a dictionary of keywords;
a processing unit configured to analyze the dictionary to identify cacheable portions of a graph based on the dictionary; and
a cache configured to cache the cacheable portions of the graph.

34. A processor comprising:
a dictionary of keywords;
a processing unit configured to analyze nodes in a graph to identify cacheable candidates based on a geometrical configuration of the graph, the processing unit further configured to select cacheable portions of the graph among the cacheable candidates based on the dictionary; and
a cache configured to cache the cacheable portions of the graph.
